# EUROPEAN PATENT APPLICATION

(11) **EP 3 479 702 A2**
(43) Date of publication of application: **08.05.2019**
(21) Application number: 17820525.8
(22) Date of filing: 28.06.2017
(51) Int. Cl.: A23L 11/20, A23L 3/005, F28F 19/00, F28D 1/04

(54) **METHOD FOR PREPARING FERMENTED SOYBEAN PRODUCTS AND FERMENTED SOYBEAN PRODUCTS PREPARED THEREBY**

(30) Priority: 30.06.2016 KR 20160082657
(71) Applicant: Cj Cheiljedang Corporation, Seoul 04560 (KR)
(72) Inventor: JANG, Eun Seok, Suwon-si Gyeonggi-do 16435 (KR); SHIN, Hye Won, Seoul 06317 (KR); CHO, Sun A, Suwon-si Gyeonggi-do 16509 (KR); SONG, Chi Kwang, Anyang-si Gyeonggi-do 13994 (KR); JANG, Hyun Jun, Yongin-si Gyeonggi-do 16843 (KR); KANG, Dae Ik, Goyang-si Gyeonggi-do 10387 (KR); MOON, Byoung Seok, Anyang-si Gyeonggi-do 14070 (KR)
(74) Representative: Robson, Aidan John
(86) International application number: PCT/KR2017/006820
(87) International publication number: WO 2018/004249

(57) **Abstract**

The present invention relates to a method for preparing fermented soybean products and fermented soybean products prepared thereby and, specifically, to a method for preparing fermented soybean products with improved shelf life while maintaining the quality of the fermented soybean products, the method comprising the steps of: controlling the physical properties of a raw material; and sterilizing the raw material by means of a tubular-type heat exchanger.

## Description

### [Technical Field]

The present invention relates to a method for preparing fermented soybean products and fermented soybean products prepared thereby, and more particularly, to a method for preparing fermented soybean products having improved shelf life while maintaining the quality of the fermented soybean products, which includes controlling the physical properties of a raw material; and sterilizing the raw material by means of a tubular-type heat exchanger.

### [Background Art]

Because fermented soybean products such as soybean paste ("Doenjang" in Korean) and hot pepper paste ("Gochujang" in Korean), which Korean people have eaten in large quantities, are fermented foods and preserved foods which are ingested for a long period of time, a number of microorganisms live in the fermented soybean products. Harmful bacteria, which cause harm to human bodies due to food poisoning, may be included in these microorganisms.

Therefore, there is a need for a sterilization method capable of killing the harmful bacteria without sacrificing advantages as the fermented foods (that is, without little or no change in total bacterial counts).

As such, the flavor of traditional fermented soybean products is derived from fermentation products produced by enzymes and microorganisms, and serves as one of important factors which can cause troubles regarding the stability in distribution. In particular, because excessive fermentation by microorganisms and decomposition and degeneration of components by microorganism-derived enzymes lead to generation of gases, deteriorated product qualities such as discoloration, and the like, commercially available products made from fermented soybean products are prepared by sterilizing the fermented soybean products at 60 to 80 °C for 10 to 30 minutes or adding a small amount of an alcohol thereto. However, an alcohol added to improve the shelf life cannot be used to export the fermented soybean products to the Muslim market. Therefore, it is necessary to reduce the number of microorganisms in order to ensure the stability in distribution.

Also, because low-viscosity products (sauces, mixed pastes, marinates) or applies products using the fermented soybean products have lots of drawbacks in that the microorganisms should be controlled for the purpose of being distributed at room temperature, there is a need for fermented soybean products in which the number of microorganisms is reduced.

The Standards and Specifications for Foods in Korea require the presence of 10,000 CFU/g or less of the strain *Bacillus cereus* in fermented soybean products and fermented soybean product-based sauces, and also require discontinuous sterilization or high-temperature sterilization in order to kill the heat-resistant spore-forming bacteria such as the genus *Bacillus.* In this case, the discontinuous sterilization has a drawback in that it is difficult to commercially apply because it is time-consuming and greatly influenced by the seasons. In the case of the high-temperature sterilization, the contents should be sealed and heated at a high temperature of 121 °C and a high pressure for several minutes to several tens of minutes. In this case, the high-temperature sterilization has a drawback in that it is difficult to ensure the safety and maintain the quality because it causes damage to sensory qualities such as taste, appearance, texture, and the like and applies overload to the equipment due to the changes in physical properties.

Methods of sterilizing a food may be divided in two categories, depending on the heating conditions: non-thermal sterilization and thermal sterilization. In this case, the non-thermal sterilization includes irradiation, ultra-high-pressure sterilization, intense pulsed light treatment, and the like.

Such non-thermal sterilization has an advantage in that it can maintain the freshness of nutrients and foods and prevent a degradation of food flavor caused by heat treatment, but has a drawback in that it has a lower activity to sterilize microorganisms. The thermal sterilization is a method of thermally treating microorganisms at a high temperature at which the microorganisms do not grow/survive to kill the microorganisms. For example, direct thermal sterilization (steam blow-in type sterilization) has been widely used in the food industry because it exhibits high economic feasibility and usability, compared to other sterilization methods. The thermal sterilization may be divided into high-temperature sterilization and pasteurization, depending on the type of target microorganisms. The high-temperature sterilization is a method of reducing the counts of heat-resistant microorganisms at a temperature of 100 °C or higher, and includes short-time sterilization, retort sterilization, and the like, and the pasteurization is a method of reducing the number of/sterilizing vegetative cells of heat-sensitive, pathogenic microorganisms, yeasts, fungi, or the like at a temperature of 100 °C or lower, and includes batch sterilization, and the like.

Also, the methods of sterilizing a food may be divided into batch-type sterilization (for example, batch sterilization, retort sterilization) and continuous-type sterilization (for example, high-temperature short-time (HTST) sterilization, ultra-high-temperature (UHT) short-time sterilization, pasteurization), depending on the type of sterilizers.

Continuous-type high-temperature short-time (HTST) sterilization methods may be divided into plate-type HTST sterilization methods using a plate-type heat exchanger and tubular-type HTST sterilization methods using a tubular-type heat exchanger, depending on the structures of heat exchangers. A heat exchanger is an apparatus that is configured in the form of a doublet and conducts heat from a high-temperature fluid (hot water or steam), which is a heat-conducting material disposed outside a heat transfer surface, to a low-temperature fluid (foods to be sterilized) disposed inside the heat transfer surface without mixing the fluids, and thus has been widely used in the food industry.

The plate-type heat exchanger has been mainly used to sterilize foods having a low viscosity and free from pulp or raw material particles, such as milk, soy sauce, and the like, and the tubular-type heat exchanger has been mainly used to sterilize sauces containing pulp or particles, which may clog sterilization channels in the plate-type heat exchanger. A scraped-surface heat exchanger (SSHE) is an apparatus that is configured so that a scraper is installed inside the tubular-type heat exchanger and designed so that it cannot cause a decrease in sterilization effect by preventing scales, which are formed when a conventional fluid is used for a long period of time, from being attached to a surface of the heat exchanger or preventing a high-viscosity sauce from being burned by a high-temperature heat transfer surface, and thus has been used for high-viscosity fermented soybean products or sauces having large particles in products.

For example, Korean Patent Publication No. 10-2000-0056729 discloses a method and an apparatus for preparing a sterilized liquid cooking sauce, characterized in that the liquid cooking sauce is sterilized at a temperature of 130 to 150 °C for approximately 2 seconds to 2 minutes using a continuous tubular-type sterilization system. However, the aforementioned sterilization system has problems such as a rise in pressure and degraded heat transfer efficiency when applied to high-viscosity products.

### [Prior-Art Document]

### [Patent Document]

Patent Document 0001: Korean Patent Publication No. 10-2000-0056729 (September 15, 2000)

### [Disclosure]

### [Technical Problem]

Therefore, the present inventors have conducted research to provide a method for preparing fermented soybean products whose shelf life is improved while maintaining the quality of the fermented soybean products, and found a method for preparing fermented soybean products, which includes controlling the physical properties of a raw material and sterilizing the raw material by means of a tubular-type heat exchanger. Therefore, the present invention has been completed based on these facts.

Accordingly, it is an object of the present invention to provide a method for preparing fermented soybean products whose shelf life is improved while maintaining the quality of the fermented soybean products.

It is another object of the present invention to provide fermented soybean products prepared by the method of the present invention.

### [Technical Solution]

To solve the above problems, according to an aspect of the present invention, there is provided a method for preparing fermented soybean products, which includes controlling the physical properties of a raw material; chopping the raw material whose physical properties are controlled; preheating the chopped raw material; sterilizing the raw material undergoing the preheating by means of a tubular-type heat exchanger; and cooling, filling and packaging the sterilized raw material.

According to another aspect of the present invention, there are provided fermented soybean products whose shelf life is improved while maintaining the quality which are prepared by the aforementioned method.

### [Advantageous Effects]

The present invention has an effect of solving a rise in pressure and degraded heat transfer efficiency during sterilization by controlling the physical properties of fermented soybean products before the sterilization.

Also, the fermented soybean products which maintain the quality of conventional fermented soybean products, have a small amount of microorganisms in products after sterilization, and may be stably distributed without any growth of microorganisms at room temperature, particularly fermented soybean products whose shelf life is improved due to the sterilized microorganisms can be provided. The fermented soybean products can be widely used in/applied to the food industry. Also, this can be utilized as alternative technology for retort sterilization in which the quality of foods is highly degraded, and characterized by continuous productions.

### [Description of Drawings]

FIG. 1 is a flowchart illustrating a method for preparing fermented soybean products according to the present invention.
FIG. 2 is an image of comparing hot pepper paste before/after sterilization using a retort system in Comparative Example 5.
FIG. 3 shows the appearances of hot pepper paste before/after sterilization, showing that 10 parts by weight of purified water is added to the hot pepper paste whose physical properties are controlled to sterilize the hot pepper paste using the method according to the present invention.

### [Best Mode]

Hereinafter, the present invention will be described in further detail with reference to the drawings.

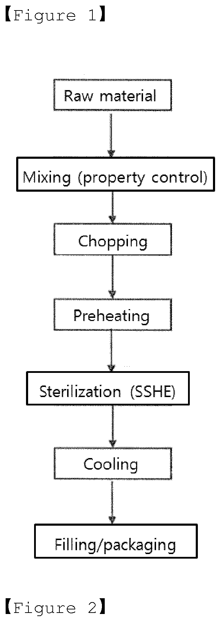

According to one aspect of the present invention, there is provided a method for preparing fermented soybean products, which includes 1) controlling the physical properties of a raw material, 2) chopping the raw material whose physical properties are controlled, 3) preheating the chopped raw material, 4) sterilizing the raw material undergoing the preheating by means of a tubular-type heat exchanger, and 5) cooling, filling and packaging the sterilized raw material (see FIG. 1).

Because the method of the present invention includes 1) controlling the physical properties of the raw material, the method is characterized in that the qualities (i.e., color, fragrance) of the raw material may be maintained even after the raw material has undergone the steps of 3) preheating the chopped raw material and 4) sterilizing the raw material undergoing the preheating. The raw material may be a known fermented soybean product to be sterilized. Specifically, the raw material may be any one selected from hot pepper paste, soybean paste, seasoned soybean paste, and fermented soybean products-based sauce, but the present invention is not limited thereto. The hot pepper paste may contain 36 to 41% by weight of moisture, and the soybean paste may contain 48 to 53% by weight of moisture. Also, the seasoned soybean paste may contain 44 to 48% by weight of moisture, and the fermented soybean products-based sauce may contain 45 to 75% by weight of moisture. Meanwhile, one example of the fermented soybean products-based saucemay be prepared by mixing 1 to 10% by weight of an anchovy/kelp extract and 30 to 40% by weight of purified water with 50 to 60% by weight of soybean paste.

The controlling of the physical properties according to the present invention may be performed by adding 1 to 50 parts by weight of a physical property control solution, based on 100 parts by weight of the raw material. Specifically, the physical property control solution may be added at a content of 1 to 15 parts by weight, but the present invention is not limited thereto. The physical property control solution may be used as long as it can control the physical properties of the fermented soybean products. Specifically, the physical property control solution may be any one or more selected from purified water, a seasoning liquid (anchovy, kelp, or the like), low-sugar water, a cooking alcohol, spirit of wine, and the like. Changes in physical properties such as an increase in viscosity and a decrease in flavor caused by evaporation of moisture, which is included in the raw material, during a sterilization process through the addition of the property control solution (controlling of the physical properties) may be prevented to maintain the quality of the fermented soybean products and prevent an overload from being applied to the equipment.

When the raw material of the present invention is hot pepper paste, the controlling of the physical properties of the hot pepper paste may be performed by adding 1 to 11 parts by weight of the physical property control solution, based on 100 parts by weight of the hot pepper paste. Specifically, the physical property control solution may be added so that the moisture content in the hot pepper paste whose physical properties are controlled is in a range of 41 to 50% by weight, more particularly in a range of 42 to 46% by weight. Also, when the raw material is soybean paste, the controlling of the physical properties of the soybean paste may be performed by adding 3 to 18 parts by weight of the physical property control solution, based on 100 parts by weight of the soybean paste. Specifically, the physical property control solution may be added so that the moisture content in the soybean paste whose physical properties are controlled is in a range of 54 to 60% by weight, more particularly in a range of 54 to 56% by weight. Also, when the raw material is seasoned soybean paste, the controlling of the physical properties of the seasoned soybean paste may be performed by adding 1 to 10 parts by weight of the physical property control solution, based on 100 parts by weight of the seasoned soybean paste. Specifically, the property control solution may be added so that the moisture content in the seasoned soybean paste whose physical properties are controlled is in a range of 44 to 56% by weight, more particularly in a range of 48 to 52% by weight. In addition, when the raw material is fermented soybean products-based sauce, the controlling of the physical properties of the fermented soybean products-based sauce may be performed by adding 1 to 40 parts by weight of the physical property control solution, based on 100 parts by weight of the fermented soybean products-based sauce.

Optionally, the aforementioned moisture contents in the fermented soybean products may be realized by controlling the physical properties of the fermented soybean products upon preparation of the hot pepper paste, the soybean paste, the seasoned soybean paste, and the fermented soybean products-based sauce.

The method according to the present invention may include chopping the raw material whose physical properties are controlled. The raw material whose physical properties are controlled may be homogenized through the chopping step to enhance sterilization efficiency and prevent an overload from being applied to the equipment.

The method according to the present invention may include preheating the chopped raw material. The preheating step includes heating the chopped raw material before a high-temperature sterilization step, and thus has effects of preventing degradation of quality caused by a sudden change temperature in the sterilization step and preventing slurry formation, thereby preventing an overload from being applied to the equipment. The preheating may be performed by varying a heating temperature according to the raw material or the moisture content. Specifically, the chopped raw material may be heated to 45 to 85 °C, more particularly 55 to 65 °C.

The method of the present invention may include sterilizing the raw material undergoing the preheating by means of a tubular-type heat exchanger. In the case of the sterilization using the tubular-type heat exchanger, the method has a higher sterilization effect, compared to the conventional methods of sterilizing fermented soybean products. Therefore, the method of the present invention has a beneficial effect even for long-term storage as in the overseas export of the fermented soybean products. In particular, an alcohol added to improve the shelf life cannot be used to export the fermented soybean products to the Muslim market. The method of the present invention may have an effect in ensuring the stability in distribution by reducing the initial number of bacteria using the technology of the present invention.

In prior art, batch-type sterilization has been mainly used to sterilize the fermented soybean products. In a method, the sterilization is performed at approximately 65 to 70 °C for approximately 15 minutes to 30 minutes. This batch-type sterilization has a low sterilization effect, and has difficulties in maintaining the quality of the raw material (see Comparative Examples 1 to 5). However, according to the present invention, because the raw material is sterilized by means of the tubular-type heat exchanger, the number of microorganisms may be reduced to a level lower than the criteria for the Standards and Specifications for Foods in Korea while maintaining the quality of the raw material. Specifically, a scraped-surface heat exchanger (SSHE) may be used as the tubular-type heat exchanger.

Also, the sterilization step may be performed at 105 to 135 °C for 5 to 40 seconds, particularly performed at 115 to 130 °C for 10 to 30 seconds. When the sterilization step is performed out of the temperature and time ranges, the raw material may not be effectively sterilized or excessively sterilized, resulting in degraded quality of products. More specifically, the preheated hot pepper paste may be subjected to a sterilization step at 120 °C for 15 to 30 seconds, and the preheated soybean paste may be subjected to a sterilization step at 120 to 125 °C for 30 seconds. Also, the preheated seasoned soybean paste may be subjected to a sterilization step at 120 °C for 15 to 30 seconds, and the preheated fermented soybean products-based sauce may be subjected to a sterilization step at 120 to 125 °C for 30 seconds.

The sterilized raw material has a total bacterial count of 10³ CFU/g or less. The total bacterial count meets the criteria for the Standards and Specifications for Foods for fermented soybean products and fermented soybean product-based sauces. In this case, when the total bacterial count satisfies this range, the sterilized raw material has an effect of inhibiting the growth of microorganisms at room temperature for a long period of time (12 months or more). Also, when the total bacterial count satisfies this range, the stability in distribution of products may be ensured even when a spirit of wine is not added for the purpose of exporting to the Halal market, and the raw material may satisfy the criteria (10³ CFU/g or less) when hot sauce is made from the hot pepper paste in U.S.A or Japan. Also, although it is difficult to reduce the number of harmful microorganisms such as *Bacillus cereus* and *Clostridium perfringens* through general sterilization due to formation of heat-resistant spores, the number of the harmful microorganisms may be reduced by making use of the present invention. Especially the present invention is effective because U.S.A and Japan (Global) sometimes require an undetectable level of the harmful microorganisms.

The method of the present invention may include cooling, filling and packaging the sterilized raw material. Specifically, the sterilized raw material may be cooled at 15 to 35 °C. When the cooling temperature is out of this range, the quality of the raw material may be degraded.

The method of the present invention may be effective in controlling the physical properties of fermented soybean products before sterilization to solve the problems such as a rise in pressure and degraded heat transfer efficiency during the sterilization, and thus effective in preparing the fermented soybean products by sterilizing the fermented soybean products so as to prevent an overload from being applied to the equipment and meet the criteria for the Standards and Specifications for Foods in Korea as well, and simultaneously maintaining the qualities (color, fragrance, texture, and the like) of the sterilized fermented soybean products.

According to second aspect of the present invention, there are provided fermented soybean products prepared by the method of the present invention. The fermented soybean products prepared by the aforementioned method have an effect of improving the shelf life while maintaining the quality of conventional fermented soybean products.

### [Mode for Invention]

Hereinafter, the present invention will be described in further detail with reference to examples thereof. However, it should be understood that the following examples are not intended to limit the scope of the present invention.

### [EXAMPLES]

### Experimental Example 1: Measurement of moisture contents of hot pepper paste, soybean paste, seasoned soybean paste and fermented soybean products-based sauce

A moisture content of a raw material (fermented soybean products) was measured using an ambient-pressure drying method before controlling the physical properties of the raw material. Specifically, a sample of fermented soybean products was dried by heating at 105 to 110 °C for a predetermined time until the sample of fermented soybean products reached a constant weight, and the moisture content was quantified as a decrease in mass. As a result of measurement, it was confirmed that the hot pepper paste was included at a content of 36 to 41% by weight, the soybean paste was included at a content of 48 to 53% by weight, the seasoned soybean paste was included at a content of 44 to 48 % by weight, and the fermented soybean products-based sauce was included at a content of 45 to 75% by weight. The following experiments were performed on comparative examples and examples using the aforementioned fermented soybean products as the raw material.

### Comparative Example 1: Confirmation of sterilization effect according to mash copper batch-type sterilization method

To check a sterilization effect of the fermented soybean products using a conventional sterilization method, the fermented soybean products were sterilized by means of mash copper batch-type sterilization which was a conventional method of sterilizing fermented soybean products. The bacterial counts of general bacteria, heat-resistant bacteria, coliform group, *Bacillus cereus, Clostridium perfringens,* fungi and *Salmonella* after the sterilization were determined. The results are listed in Table 1. Specific sterilization conditions were as follows: the hot pepper paste was sterilized at 65 °C for approximately 15 minutes, the soybean paste was sterilized at 75 °C for approximately 20 minutes, and the seasoned soybean paste was sterilized at 72 °C for approximately 20 minutes.

**[Table 1]**

| Bacterial counts of microorganisms before/after mash copper batch-type sterilization | | | | | | | | |
|---|---|---|---|---|---|---|---|---|
| Samples | | Analysis items | | | | | | |
| | | General bacteria | Heat-resistant bacteria | *E. Coli* | B.C | C.P | Fungi | *Salmonella* |
| Hot pepper paste | Before sterilization | 6.9*10⁶ | 7.1*10⁶ | Negative | 7.0*10¹ | 4.0*10¹ | 7.8*10² | Negative |
| | After sterilization | 1.4*10⁶ | 1.2*10⁵ | Negative | 5.0*10¹ | 3.0*10¹ | 0 | Negative |
| Soybean paste | Before sterilization | 4.7*10⁸ | 7.1*10⁶ | Negative | 2.8*10² | - | 1.8*10⁶ | Negative |
| | After sterilization | 4.3*10⁸ | 4.8*10⁶ | Negative | 2.6*10² | | 2.8*10¹ | Negative |
| Seasoned soybean paste | Before sterilization | 5.4*10⁶ | 3.4*10⁵ | Negative | 1.0*10² | | 5.8*10⁵ | Negative |
| | After sterilization | 6.9*10⁵ | 1.8*10⁵ | Negative | 8.0*10¹ | | 1.0*10¹ | Negative |
| *Units: CFU/g | | | | | | | | |

As a result of sterilization, it was confirmed that only the fungi as a volume-expanding microorganism were significantly sterilized, but that the bacterial counts of the general bacteria and heat-resistant bacteria were not significantly changed before/after the sterilization of commercially available fermented soybean products under the sterilization conditions.

### Comparative Example 2: Confirmation of sterilization effect according to discontinuous sterilization method

To check the sterilization effect according to a conventional discontinuous sterilization method, each of soybean paste and hot pepper paste was primarily sterilized at 90 °C for 30 minutes, and secondarily sterilized at 75 °C for 30 minutes after 24 hours of the primary sterilization. Then, the total bacterial counts after the respective sterilization steps were determined. The results are listed in Table 2.

**[Table 2]**

| Bacterial counts of microorganisms before/after sterilization according to discontinuous sterilization method | | | |
|---|---|---|---|
| Samples \ Items | Before sterilization | After primary sterilization (at 90 °C for 30 minutes) | After secondary sterilization (at 75 °C for 30 minutes) |
| Soybean paste | 5.9*10⁷ | 4.2*10⁶ | 1.5*10⁵ |
| Hot pepper paste | 6.3*10⁵ | 1.1*10⁵ | 6.2*10⁴ |
| *Units: CFU/g | | | |

As a result of sterilization, it was confirmed that, when the fermented soybean products were primarily sterilized (at 90 °C for 30 minutes) and secondarily sterilized (at 75 °C for 30 minutes) after the lapse of 24 hours by means of the discontinuous sterilization method, the microorganisms were sterilized by 2 log and 1 log in the case of the soybean paste and the hot pepper paste, respectively, compared to that before the sterilization, indicating that it was inappropriate to export the fermented soybean products abroad because the microorganisms were not sterilized to sufficient extents.

### Comparative Example 3: Confirmation of sterilization effect according to ultra-high-pressure sterilization

To check the sterilization effect according to conventional ultra-high-pressure sterilization, the hot pepper paste were sterilized at a pressure of 200 to 600 Mpa for 15 to 25 minutes, and the bacterial counts of the general bacteria, yeast and fungi according to the respective treatment conditions were determined. The results are listed in Table 3.

**[Table 3]**

| Bacterial counts of microorganisms before/after sterilization according to ultra-high-pressure sterilization conditions | | | | |
|---|---|---|---|---|
| Items | Treatment conditions: pressure (Mpa) - time (min) | General bacteria | Yeast | Fungus |
| Hot pepper paste | Before sterilization | 2.6*10⁵ | 8.0*10⁵ | 7.0*10³ |
| | 200 - 15 | 1.2*10⁶ | 2.0*10⁵ | 5.0*10³ |
| | 200 - 25 | 5.0*10⁵ | 1.8*10⁵ | 2.4*10² |
| | 400 - 15 | 3.0*10⁵ | 2.1*10⁴ | 2.0*10³ |
| | 400 - 25 | 1.6*10⁵ | 1.7*10⁴ | 2.1*10² |
| | 600 - 15 | 1.1*10⁵ | 2.0*10³ | 7.0*10¹ |
| | 600 - 25 | 9.7*10⁴ | 3.0*10³ | 2.0*10¹ |
| *Units: CFU/g | | | | |

When the hot pepper paste was treated at 600 Mpa for 25 minutes after the sterilization, the hot pepper paste had the highest sterilization effect. Specifically, when the hot pepper paste was treated at 600 Mpa for 25 minutes, the number of yeast was reduced by approximately 2 log, and the fungi were reduced by approximately 2 log, but the general bacteria were not significantly reduced.

### Comparative Example 4: Confirmation of sterilization effect using pressure-reducing/pressurizing batch-type sterilizer

To check the sterilization effect using a conventional pressure-reducing/pressurizing batch-type sterilizer, the hot pepper paste was sterilized at a temperature of 75 to 105 °C for 2 to 5 minutes, and the bacterial counts of the general bacteria, the heat-resistant bacteria and *Bacillus cereus* according to the respective treatment conditions were determined. The results are listed in Table 4.

**[Table 4]**

| Bacterial counts of microorganisms before/after sterilization according to pressure-reducing/pressurizing batch-type sterilization conditions | | | | | |
|---|---|---|---|---|---|
| Product name | Sterilization condition | | Microorganism (CFU/g) | | |
| | Temperature (°C) | Time (min) | General bacteria | Heat-resistant bacteria | Bacillus cereus |
| Hot pepper paste | Before sterilization | - | 1.2*10⁶ | 2.5*10³ | 1.0*10² |
| | 75 | 5 | 4.6*10⁵ | 6.0*10³ | 2.0*10² |
| | 80 | 5 | 4.0*10⁵ | 4.4*10³ | 1.0*10² |
| | 90 | 5 | 1.9*10⁵ | 9.0*10² | 2.0*10² |
| | 100 | 5 | 6.0*10³ | 4.0*10¹ | nd |
| | 90 | 2 | 1.8*10⁵ | 2.3*10³ | 1.0*10² |
| | 100 | 2 | 2.3*10⁴ | 1.8*10² | nd |
| | 105 | 2 | 8.0*10³ | 1.1*10² | nd |
| *Units: CFU/g | | | | | |
| *nd : not detected | | | | | |

When the hot pepper paste was sterilized using the pressure-reducing/pressurizing batch-type sterilizer, the hot pepper paste had the highest sterilization effect when treated at 100 °C for 5 minutes and treated at 105 °C for 2 minutes. Specifically, when the hot pepper paste was treated at 100 °C for 5 minutes and treated at 105 °C for 2 minutes, the number of the general bacteria was reduced by approximately 3 log, respectively, and the number of the heat-resistant bacteria was reduced by approximately 2 log and approximately 1 log, and *Bacillus cereus* was not detected. However, it can be seen that the color of the hot pepper paste after the sterilization was darkened, indicating that the quality of the hot pepper paste was degraded.

### Comparative Example 5: Confirmation of sterilization effect using retort (autoclave) method

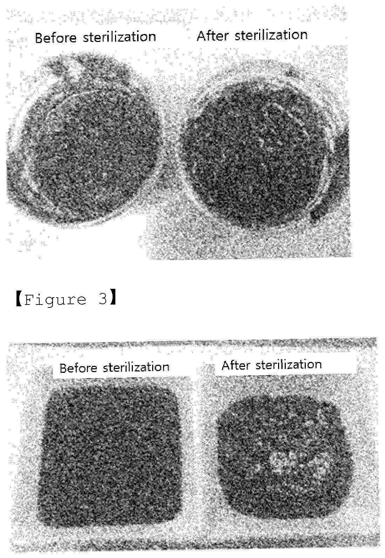

To check the sterilization effect using a conventional retort method, the hot pepper paste was sterilized at 105 to 121 °C for 5 to 20 minutes, and the bacterial counts of the general bacteria and the heat-resistant bacteria according to the respective treatment conditions after the sterilization were determined. The results are listed in Table 5, and an image for comparison of hot pepper paste before sterilization and after sterilization at 121 °C for 5 minutes is shown in FIG. 2.

**[Table 5]**

| Bacterial counts of microorganisms before/after sterilization according to sterilization conditions using retort method | | | |
|---|---|---|---|
| Items | Sterilization conditions | General bacteria | Heat-resistant bacteria |
| Hot pepper paste | Before sterilization | 8.4*10⁶ | 9.6*10³ |
| | 105 °C, 10 minutes | 2.9*10⁶ | 6.4*10³ |
| | 105 °C, 20 minutes | 5.9*10⁵ | 3.7*10³ |
| | 115 °C, 5 minutes | 2.1*10⁴ | 3.5*10² |
| | 121 °C, 5 minutes | nd | nd |
| * Units: CFU/g | | | |
| *nd : not detected | | | |

When the hot pepper paste was sterilized using the retort method, a significant sterilization effect was not easily determined under the condition of 105 °C. However, it can be seen that, when hot pepper paste was sterilized under the conditions of 121 °C and 5 minutes, and the conditions of 115 °C and 5 minutes, the hot pepper paste had a sterilization effect, but the color of the hot pepper paste was darkened and burn smells occurred, indicating that the quality of the hot pepper paste was degraded.

### Example 1: Preparation of fermented soybean products by means of method of the present invention

To check a change in quality and a preparative effect using a sterilization method of the present invention, fermented soybean products were prepared by means of the method of the present invention using hot pepper paste, soybean paste, seasoned soybean paste and fermented soybean products-based sauce as the raw materials. Specifically, in the step of controlling the physical properties, hot pepper paste was prepared by adding 5 to 15 parts by weight of purified water, based on 100 parts by weight of the hot pepper paste, soybean paste was prepared by adding 2 to 10 parts by weight of purified water, based on 100 parts by weight of the soybean paste, and seasoned soybean paste was prepared by adding 1 to 10 parts by weight of purified water. A fermented soybean products-based sauce was prepared by mixing 1 to 10% by weight of an anchovy/kelp extract and 30 to 40% by weight of purified water with 50 to 60% by weight of soybean paste. The mixed fermented soybean products were chopped to a size of 1 to 3 mm, preheated to 80 °C, and then sterilized at 18 rpm and 120 °C for 15 seconds using a scraped-surface heat exchanger (SSHE). Thereafter, the resulting fermented soybean products were cooled to 20 °C, filled and packaged to prepare the fermented soybean products.

### Experimental Example 2: Changes in textures of hot pepper paste and soybean paste prepared by method of the present invention

To check changes in qualities of fermented soybean products undergoing the method of the present invention, each of a raw material for hot pepper paste, hot pepper paste to which 5 parts by weight or 10 parts by weight of purified water was added, a raw material for soybean paste, soybean paste to which 4 parts by weight or 8 parts by weight of purified water was added was preheated to 80 °C, and sterilized at 120 °C and 18 rpm for 15 seconds by means of a scraped-surface heat exchanger. Thereafter, the textures of the cooled fermented soybean products were examined. The results are listed in Table 6, and the appearances of the hot pepper paste, which were sterilized after 10 parts by weight of purified water was added based on 100 parts by weight of the hot pepper paste, before/and the sterilization are shown in FIG. 3.

**[Table 6]**

| Comparison of physical properties of hot pepper paste/soybean paste according to amount of purified water added before sterilization | | | | | | |
|---|---|---|---|---|---|---|
| Items | Hot pepper paste | | | Soybean paste | | |
| | Raw material | 5 parts by weight of purified water added | 10 parts by weight of purified water added | Raw material | 4 parts by weight of purified water added | 8 parts by weight of purified water added |
| High Force | 176.4 | 89.5 | 71.0 | 396.1 | 215.6 | 150.1 |
| Low Force | -84.8 | -45.1 | -36.5 | -40.0 | -111.1 | -75.1 |
| L | 23.59 | 23.12 | 23.12 | 36.10 | 38.58 | 38.36 |
| a | 11.56 | 12.73 | 12.73 | 10.88 | 11.64 | 10.41 |
| b | 5.87 | 6.69 | 6.69 | 12.80 | 14.31 | 13.57 |
| * Units: Force, g | | | | | | |

It can be seen that, when the physical properties were controlled by addition of purified water, both of the hot pepper paste and soybean paste had improved quality even after the sterilization, compared to the raw material to which purified water was not added. Specifically, it can be seen that, when 10 parts by weight of purified water was added to the hot pepper paste and when 8 parts by weight of purified water was added to the soybean paste, the intrinsic physical properties of the fermented soybean products were maintained even after the sterilization. This indicates that the color and quality of the fermented soybean products prepared by the method of the present invention were maintained, compared to those prepared by the sterilization method used in the art, and thus the fermented soybean products had an excellent sterilization effect, as described below.

### Experimental Example 3: Confirmation of sterilization effect after sterilization of the present invention

To check a sterilization effect of the present invention, hot pepper paste was prepared by adding 5 to 15 parts by weight of purified water, based on 100 parts by weight of the hot pepper paste 100 parts by weight, soybean paste was prepared by adding 2 to 10 parts by weight of purified water, based on 100 parts by weight of the soybean paste, seasoned soybean paste was prepared by adding 1 to 10 parts by weight of purified water, and a fermented soybean products-based sauce was prepared by mixing 1 to 10% by weight of an anchovy/kelp extract and 30 to 40% by weight of purified water with 50 to 60% by weight of soybean paste. The mixed fermented soybean products were chopped to a size of 1 to 3 mm, put into a preheating tank, preheated to 55 to 65 °C, and then transferred to a hopper tank while being sterilized by means of a scraped-surface heat exchanger (SSHE). The bacterial counts of the general bacteria, the heat-resistant bacteria, *Bacillus cereus* and fungi after the sterilization were determined. The results according to the sterilization conditions are listed in Table 7.

**[Table 7]**

| Confirmation of bacterial counts after sterilization of the present invention | | | | | |
|---|---|---|---|---|---|
| Products | Sterilization conditions (°C - Sec) | General bacteria | Heat-resistant bacteria | BC | Fungi |
| Hot pepper paste | Before sterilization | 5.5*10⁷ | 2.5*10⁵ | 1.7*10¹ | 7.2*10³ |
| | 110 - 15 | 7.4*10⁴ | 1.2*10³ | nd | nd |
| | 115 - 15 | 1.1*10³ | 1*10¹ | nd | nd |
| | 120 - 15 | 1.0*10¹ | nd | nd | nd |
| | 120 - 30 | nd | nd | nd | nd |
| Soybean paste | Before sterilization | 4.7*10⁸ | 7.1*10⁶ | 2.0*10² | 1.0*10¹ |
| | 115 - 15 | 3.6*10⁴ | 1.0*10¹ | nd | nd |
| | 115 - 30 | 7.2*10³ | 3.8*10² | nd | nd |
| | 120 - 30 | 1.5*10² | 2.0*10¹ | nd | nd |
| | 125 - 30 | nd | nd | nd | nd |
| Seasoned soybean paste | Before sterilization | 5.4*10⁶ | 3.4*10⁵ | 5.2*10² | 3.1*10² |
| | 110 - 15 | 8.3*10³ | 8.3*10¹ | nd | nd |
| | 115 - 15 | 3.2*10³ | 2.0*10¹ | nd | nd |
| | 120 - 15 | 6.0*10¹ | nd | nd | nd |
| | 120 - 30 | nd | nd | nd | nd |
| Fermented soybean products-based sauce | Before sterilization | 6.7*10⁸ | 9.6*10⁵ | 1.1*10³ | 2.0*10¹ |
| | 115 - 15 | 9.6*10³ | 2.9*10² | nd | nd |
| | 115 - 30 | 2.1*10³ | 3.2*10² | nd | nd |
| | 120 - 30 | 1.1*10² | 1.0*10¹ | nd | nd |
| | 125 - 30 | nd | nd | nd | nd |
| * Units: CFU/g | | | | | |
| *nd : not detected | | | | | |

When the fermented soybean products were sterilized by means of the method of the present invention, the total bacterial counts were less than 10³ CFU/g when the hot pepper paste was treated at 120 °C for 15 seconds, the soybean paste was treated at 120 to 125 °C for 30 seconds, the seasoned soybean paste was treated at 120 °C for 15 seconds, and the fermented soybean products-based sauce was treated at 120 °C for 30 seconds. The aforementioned ranges of the total bacterial counts were lower than the total bacterial count of 10⁴ CFU/g of the fermented soybean products and the fermented soybean product-based sauces, which satisfied the criteria for the Standards and Specifications for Foods in Korea. Therefore, it can be seen that the total bacterial counts met the international criteria for fermented soybean products.

Also, it was confirmed that the microorganisms did not grow at 25 °C or 35 °C even after the lapse of 12 months in the fermented soybean products prepared by the method of the present invention.

### Experimental Example 4: Results of evaluation of quality of fermented soybean products prepared by method of the present invention

To evaluate the qualities of the hot pepper paste, the soybean paste, the seasoned soybean paste, and the fermented soybean products-based sauce, which were subjected to the sterilization conditions in Experimental Example 3 so that the total bacterial counts after the sterilization were less than 10³ CFU/g, sensory tests were performed using a 9-point scaling method by allowing a panel of 10 experts to taste the fermented soybean products, and the averages values were calculated. The results are listed in Tables 8 to 11, depending on the fermented soybean products.

**[Table 8]**

| Evaluation of qualities of hot pepper paste | | | |
|---|---|---|---|
| Evaluation items | Control | 120 °C, 15 seconds | 120 °C, 30 seconds |
| General preference | 3.72 | 3.74 | 3.70 |
| Color | 3.52 | 3.55 | 3.50 |
| Fragrance | 3.88 | 3.84 | 3.70 |
| Taste | 3.52 | 3.64 | 3.68 |
| Aftertaste | 3.52 | 3.67 | 3.50 |

It was confirmed that the hot pepper paste exhibited a desired microbial reduction level even when treated at 120 °C for 15 seconds by means of the sterilization method of the present invention, indicating that the hot pepper paste had a similar level of taste quality, compared to the conventional fermented soybean products. It can be seen that the hot pepper paste had general good characteristics when treated at 120 °C for 30 seconds, but had a slightly pungent peculiar smell of starch syrup, compared to the conventional fermented soybean products.

**[Table 9]**

| Evaluation of qualities of soybean paste | | | |
|---|---|---|---|
| Evaluation items | Control | 120 °C,30 seconds | 125 °C,30 seconds |
| General preference | 3.23 | 3.28 | 3.53 |
| Color | 3.25 | 3.4 | 3.56 |
| Fragrance | 3.3 | 3.32 | 3.46 |
| Taste | 3.24 | 3.21 | 3.52 |
| Aftertaste | 3.19 | 3.1 | 3.41 |
| Delicate flavor | 3.21 | 3.24 | 3.46 |
| Salty taste | 3.28 | 3 | 3.34 |

It was confirmed that the soybean paste exhibited a desired microbial reduction level even when treated at 125 °C for 30 seconds by means of the method of the present invention, indicating that the soybean paste had stable preference to the taste qualities even under the sterilization conditions.

**[Table 10]**

| Evaluation of qualities of seasoned soybean paste | | | |
|---|---|---|---|
| Evaluation items | Control | 120 °C, 15 seconds | 120 °C, 30 seconds |
| Color (appearance) preference | 3.71 | 3.82 | 3.70 |
| General taste preference | 3.72 | 3.75 | 3.70 |
| Fragrance (smell) preference | 3.50 | 3.54 | 3.45 |
| Aftertaste preference | 3.53 | 3.70 | 3.57 |
| Delicate taste preference | 3.64 | 3.71 | 3.65 |
| Delicate taste intensity | 3.05 | 3.30 | 3.12 |
| Salty taste preference | 3.30 | 3.35 | 3.4 |
| Salty taste intensity | 3.20 | 3.41 | 3.28 |
| Off-taste/off-flavor intensity | 1.50 | 1.72 | 2.12 |

It was confirmed that the seasoned soybean paste exhibited a desired microbial reduction level even when treated at 120 °C for 15 seconds by means of the method of the present invention, and had at least similar levels of taste qualities when treated at 125 °C for 15 seconds, compared to the conventional fermented soybean products. It can be seen that the seasoned soybean paste had general good characteristics when treated at 120 °C for 30 seconds, but had a slight off-taste of starch syrup.

**[Table 11]**

| Evaluation of qualities of fermented soybean products-based sauce | | | |
|---|---|---|---|
| Evaluation items | Control | 120 °C/30 seconds | 125 °C/30 seconds |
| General preference | 3.47 | 3.9 | 3.64 |
| Color | 3.45 | 3.96 | 3.84 |
| Fragrance | 3.64 | 3.86 | 3.69 |
| Soup taste | 3.53 | 3.97 | 3.62 |
| Aftertaste | 3.50 | 3.86 | 3.53 |
| Delicate taste | 3.43 | 3.81 | 3.86 |
| Salty taste | 3.69 | 3.86 | 3.62 |

It was confirmed that the fermented soybean products-based sauce exhibited a desired microbial reduction level even when treated at 120 °C for 30 seconds by means of the method of the present invention, and had excellent preference to the control when treated at 125 °C for 30 seconds, particularly that the fermented soybean products-based sauce had superior preference when treated at 120 °C for 30 seconds.

## Claims

1. A method for preparing fermented soybean products, comprising:
1) controlling the physical properties of a raw material;
2) chopping the raw material whose physical properties are controlled;
3) preheating the chopped raw material;
4) sterilizing the raw material undergoing the preheating by means of a tubular-type heat exchanger; and
5) cooling, filling and packaging the sterilized raw material.

2. The method of claim 1, wherein the raw material is any one selected from hot pepper paste, soybean paste, fermented soybean products-based sauce, and seasoned soybean paste.

3. The method of claim 1, wherein the controlling of the physical properties is adding 1 to 50 parts by weight of a physical property control solution.

4. The method of claim 2, wherein the controlling of the physical properties of the hot pepper paste is adding 1 to 11 parts by weight of the physical property control solution.

5. The method of claim 2, wherein the controlling of the physical properties of the soybean paste is adding 3 to 18 parts by weight of the physical property control solution.

6. The method of claim 2, wherein the controlling of the physical properties of the fermented soybean products-based sauce is adding 1 to 50 parts by weight of the physical property control solution.

7. The method of claim 2, wherein the controlling of the physical properties of the seasoned soybean paste is adding 1 to 10 parts by weight of the physical property control solution.

8. The method of claim 1, wherein the preheating is heating the chopped raw material to a temperature of 45 to 85 °C.

9. The method of claim 1, wherein a scraped-surface heat exchanger (SSHE) is used as the tubular-type heat exchanger.

10. The method of claim 1, wherein the sterilizing is performed at 105 to 135 °C for 5 to 40 seconds.

11. The method of claim 4, wherein the sterilizing is performed at 120 °C for 15 to 30 seconds.

12. The method of claim 5, wherein the sterilizing is performed at 120 to 125 °C for 30 seconds.

13. The method of claim 6, wherein the sterilizing is performed at 120 to 125 °C for 30 seconds.

14. The method of claim 7, wherein the sterilizing is performed at 120 °C for 15 to 30 seconds.

15. The method of claim 1, wherein the sterilized raw material has a total bacterial count of 10³ CFU/g or less.

16. The method of claim 1, wherein the cooling is to cool at 15 to 35 °C.

17. Fermented soybean products prepared by method according to any one of claims 1 to 16.
